(19) Europäisches Patentamt
European Patent Office
Office européen des brevets

(11) EP 1 555 295 B1

(12) EUROPEAN PATENT SPECIFICATION

(45) Date of publication and mention
of the grant of the patent:
**11.05.2011 Bulletin 2011/19**

(21) Application number: 03756721.1

(22) Date of filing: 21.10.2003

(51) Int Cl.:
*C08L 67/00* (2006.01)    *C08J 3/07* (2006.01)

(86) International application number:
**PCT/JP2003/013418**

(87) International publication number:
**WO 2004/037924 (06.05.2004 Gazette 2004/19)**

(54) **AQUEOUS POLYESTER RESIN DISPERSION AND METHOD FOR PRODUCTION THEREOF**

WÄSSRIGE POYLESTERHARZDISPERSION UND HERSTELLUNGSVERFAHREN DAFÜR

DISPERSION AQUEUSE DE RESINE POLYESTER ET SON PROCEDE D'ELABORATION

(84) Designated Contracting States:
**DE FR GB**

(30) Priority: **22.10.2002 JP 2002307159**

(43) Date of publication of application:
**20.07.2005 Bulletin 2005/29**

(73) Proprietor: **UNITIKA LTD.**
**Amagasaki-shi,**
**Hyogo 660-0824 (JP)**

(72) Inventors:
 • **KAJIMARU, Hiroshi**
   **UNITIKA LTD.**
   **Uji-shi, Kyoto 611-0021 (JP)**
 • **NAGARA, Yoshitaka**
   **UNITIKA LTD.**
   **Uji-shi, Kyoto 611-0021 (JP)**

 • **MATSUNAGA, Mamiko**
   **UNITIKA LTD.**
   **Uji-shi, Kyoto 611-0021 (JP)**
 • **SHIRASAWA, Daisuke**
   **UNITIKA LTD.**
   **Chuo-ku, Tokyo 103-8321 (JP)**
 • **KOKURYO, Sachiko**
   **UNITIKA LTD.**
   **Osaka-shi, Osaka 541-8566 (JP)**

(74) Representative: **HOFFMANN EITLE**
    **Patent- und Rechtsanwälte**
    **Arabellastraße 4**
    **81925 München (DE)**

(56) References cited:
    **EP-A- 1 202 122      JP-A- 9 100 396**
    **JP-A- 2003 253 102**

**EP 1 555 295 B1**

**Description**

Technical Field

The present invention relates to a polyester resin aqueous dispersion superior in storage stability that provides resin films superior in film properties when coated on various base materials.

Background Art

Polyester resins, which are superior as film-forming resins in film processability, resistance to organic solvents (solvent resistance), weather resistance, adhesiveness to various base materials, and the like, have been consumed as a binder component in a large amount in the fields of paint, ink, adhesive, coating agent, and the like.

Recently in particular, in the trend toward restriction of the use of organic solvents from the viewpoints of environmental protection, energy conservation, regulations of hazardous substances for example by the Fire Defense Law, and working environment improvement; and for use as a polyester resin-based binder in such applications, polyester resin aqueous dispersions finely dispersed in an aqueous medium have been intensively developed.

For example, polyester resin aqueous dispersions of a high-molecular weight polyester resin having a small acid value dispersed in an aqueous medium were disclosed in Patent Documents 1 to 4, and use of these aqueous dispersions was described to provide a film superior in performances such as processability, water resistance, solvent resistance. However, all of the polyester resin aqueous dispersions described in these documents are so-called self-emulsifiable polyester resin aqueous dispersions wherein the resin particles are dispersed in an aqueous medium by neutralizing the carboxyl groups of polyester resin with a basic compound; and for stable dispersion of the polyester resin in the aqueous medium, the polyester resin used need to have carboxyl groups in an amount equivalent to an acid value of 8 mg KOH/g or more. As a result, there may arise such problems as restriction of the molecular weight of the polyester resin and insufficiency in water resistance.

Alternatively, Patent Documents 5 and 6 propose methods of producing an aqueous dispersion of a polyester resin by using a basic compound and a nonionic surfactant. However, the polyester resin aqueous dispersions described in these documents contain a large amount of surfactant with respect to the polyester resin, and thus, a resin film formed by using such a polyester resin aqueous dispersion had the problem of a large amount of the surfactant remaining therein and thus deterioration in the water resistance of the resulting resin film.

The dispersion of Patent Document 6 is essentially a W/O-type emulsion, and had the problem that some kinds of substrates to be coated (base material) are damaged by the organic solvent contained in the polyester resin aqueous dispersion.

Patent Document 7 discloses a polyester resin aqueous dispersion of a polyester resin using a monomer having a particular chemical structure as the copolymerization component dispersed in an aqueous medium and that a resin film superior in water resistance is formed even when the molecular weight is small; but there is such a problem as the processability of the resulting resin film is poor because of the lower molecular weight.

In the method for producing a polyester resin particle dispersion material according to Patent Document 8, a melt of a resin containing, as an essential component, a specific polyester resin is dispersed in a heated aqueous medium in a melted state, and the dispersed resin melt is cooled. A distinct group of the specific polyester resin is stated as preferably having a weight-average molecular weight (Mw) of 10,000 to 500,000 and an acid value of 5 to 100 mg KOH/g (see Claim 3 of Patent Document 8). The aqueous medium to which the resin melt is added to be dispersed may contain basic compounds. The volume-average particle size of the polyester particles in the dispersion materials obtained in the working examples of Patent Document 8 is reported to be 1.9 $\mu$m (Example 1), 70 $\mu$m (Example 2), 5.6 $\mu$m (Example 3) and 5.2 $\mu$m (Example 4).

Patent Document 1: Japanese Unexamined Patent Publication No. 296100 (1997)
Patent Document 2: Japanese Patent Application Laid-Open No. 26709 (2000)
Patent Document 3: Japanese Patent Application Laid-Open No. 313793 (2000)
Patent Document 4: Japanese Patent Application Laid-Open No. 2002-173582 (2002)
Patent Document 5: Japanese Patent Application Publication No.24375 (1976)
Patent Document 6: Japanese Patent Application Publication No. 14101 (1978)
Patent Document 7: Japanese Patent Publication No. 3162477
Patent Document 8: EP 1 202 122 A1

Disclosure of Invention

(Problems to be Solved by the Invention)

Under such circumstance as above mentioned, an object of the present invention is to provide an aqueous resin dispersion containing polyester resin having a low acid value and a high-molecular weight that is excellent in storage stability and can form a resin film superior in film properties such as adhesiveness to base materials, water resistance, solvent resistance, processability, and a process for producing the same.

(Means for Solving the Problems)

After intensive studies to solve the problems above, the present inventors have found that it was possible to disperse a low-acid value and high-molecular weight polyester resin stably in an aqueous medium without use of a surfactant by controlling temperature during phase-inversion emulsification and that the resin films formed by using the aqueous dispersion prepared in this manner had favorable film properties.
A first aspect of the present invention is a polyester resin aqueous dispersion, comprising a polyester resin (A) having an acid value of 2 mg KOH/g or more and less than 8 mg KOH/g and a number-average molecular weight of 5,000 or more, a basic compound (B) and water (C), wherein the content of the polyester resin (A) is 1 to 70 percent by mass, the content of water (C) is 10 percent by mass or more, the volume-average particle size of the particles in the polyester resin aqueous dispersion is ≤ 400 nm, and no surfactant is contained.
A second aspect thereof is a process for producing the polyester resin aqueous dispersion, comprising; dispersing a solution of a polyester resin (A) in an organic solvent together with a basic compound (B) in water by phase-inversion emulsification, wherein the concentration of (A) in the solution is 10 to 70% by mass and wherein the phase-inversion emulsification is carried out at a temperature of 40˚C or lower.
A third aspect thereof is the above process for producing the polyester resin aqueous dispersion, further comprising; removing the organic solvent after the phase-inversion emulsification.

(Advantageous effects over conventional art)

The polyester resin aqueous dispersion according to the present invention, which can form a resin film superior in film properties such as adhesiveness to base materials, water resistance, and solvent resistance, can be favorably used alone as a paint, coating agent, or adhesive or in combination with other components as a binder component. In addition, the dispersion of the present invention is effective in improving the properties of various materials when used as an anchor coat agent or an adhesive agent (easier adhesion) for various films such as PET film, polyolefin film, and deposited film; an anchor coat agent and an adhesive agent (easier adhesion)of various metal plates such as aluminum plate, steel plate, and plated steel plate; a precoated-metal paint; a paper coating agent; a fiber processing agent; an adhesive for adhering base materials such as paper, metal plate, and resin sheet; a binder for inks. The polyester resin aqueous dispersion of the present invention is also superior in dispersion stability during storage and production.

Brief Description of the Drawings

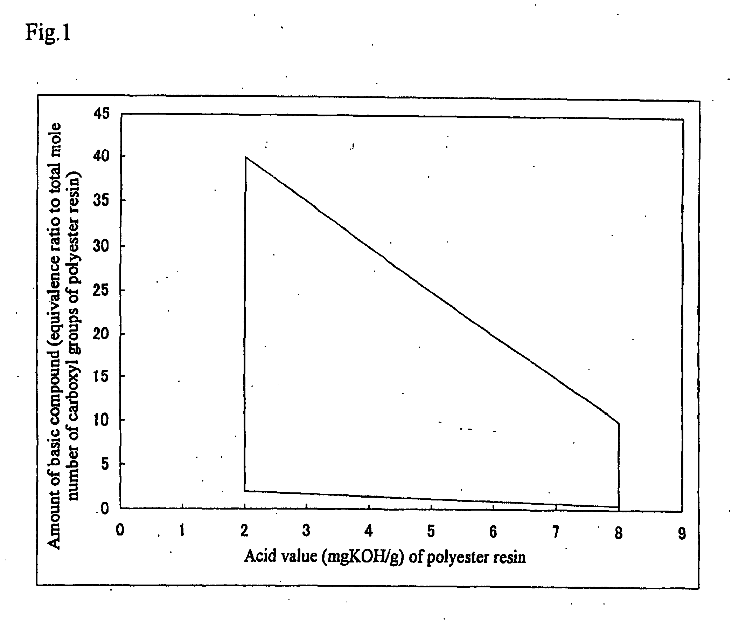

Figure 1 is a chart showing the relationship between an acid value of polyester resin and a favorable amount of basic compound used in the phase-inversion emulsification step. In Figure 1, the amount of basic compound represents an equivalence ratio to the total mole number of the carboxyl groups of polyester resin (in the range specified by Formula (1)).

Preferred Embodiments of the Invention

The present invention will be described in detail hereinafter.
The polyester resin aqueous dispersion according to the present invention (hereinafter, referred to as "aqueous dispersion") is a liquid containing

(A) a polyester resin having an acid value of 2 mg KQH/g or more and less than 8 mg KOH/g and a number-average molecular weight of 5,000 or more,
(B) a basic compound, and
(C) water,

wherein the polyester resin (A) is dispersed in an aqueous medium containing water (C) without use of a surfactant.

The polyester resin (A) is explained first below.

In the present invention, the polyester resin has an acid value of 2 mg KOH/g or more and less than 8 mg KOH/g, preferably 3 mg KOH/g or more and less than 8 mg KOH/g, more preferably 4.1 mg KOH/g or more and less than 8 mg KOH/g, and still more preferably 4.6 mg KOH/g or more and less than 8 mg KOH/g. When the acid value is 8 mg KOH/g or more, the molecular weight of polyester resin becomes smaller, leading to deterioration of the processability and occasionally to an insufficient water resistance of the resulting resin film. An acid value is less than 2 mg KOH/g, it is apt be more difficult to produce a uniform aqueous dispersion.

The polyester resin may contain hydroxyl groups in the range that does not impair the water resistance of the resulting resin film, and the hydroxyl value of the resin is preferably 30 mg KOH/g or less, more preferably 20 mg KOH/g or less, and still more preferably 10 mg KOH/g or less.

The number of average molecular weight of the polyester resin is 5,000 or more, preferably 7,000 or more, more preferably 9,000 or more, still more preferably 11,000 or more, still more preferably 13,000 or more, and particularly preferably 15,000 or more. When the number-average molecular weight is less than 5,000, a resin film with poor processability tends to be given. The upper limit of the number-average molecular weight is not particularly limited, but from the viewpoint of easiness in producing an aqueous dispersion having a favorable storage stability, the number-average molecular weight of polyester resin is preferably 50,000 or less, more preferably 40,000 or less, and particularly preferably 30,000 or less.

The degree of dispersion in molecular weight distribution of the polyester resin is not particularly limited, but the degree of dispersion in molecular weight distribution is preferably 8 or less, more preferably 5 or less, from the viewpoint of the storage stability of aqueous dispersion. The degree of dispersion in molecular weight distribution is a value calculated by dividing a weight-average molecular weight by a number-average molecular weight.

A glass transition temperature of the polyester resin (hereinafter, referred to as Tg) is not particularly limited, but preferably -50 to 120˚C, more preferably 0 to 85˚C from the viewpoint of the storage stability of aqueous dispersion.

In the present invention, the polyester resins, which are inherently indispersible or insoluble in water, are prepared essentially from a polybasic acid and a polyhydric alcohol. Components of these polyester resins will be described below.

The polybasic acid component for constituting the polyester resin is, for example, an aromatic polybasic acid, an aliphatic polybasic acid, an alicyclic polybasic acid. Among aromatic polybasic acids, aromatic dicarboxylic acids include terephthalic acid, isophthalic acid, orthophthalic acid, phthalic anhydride, naphthalenedicarboxylic acid, biphenyldicarboxylic acid, and the like; among aliphatic polybasic acids, aliphatic dicarboxylic acids include saturated aliphatic dicarboxylic acids such as oxalic acid, succinic acid, succinic anhydride, adipic acid, azelaic acid, sebacic acid, dodecanedioic acid, eicosanedioic acid, and hydrogenated dimer acids; unsaturated aliphatic dicarboxylic acids such as fumaric acid, maleic acid, maleic anhydride, itaconic acid, itaconic anhydride, citraconic acid, citraconic anhydride, dimer acid. Among alicyclic polybasic acids, alicyclic dicarboxylic acids include 1,4-cyclohexanedicarboxylic acid, 1,3-cyclohexanedicarboxylic acid, 1,2-cyclohexanedicarboxylic acid, 2,5-norbornenedicarboxylic acid and the anhydride thereof, tetrahydrophthalic acid and the anhydride thereof.

In addition, a trifunctional or higher polybasic acid may be added as the polybasic acid component; example thereof include trimellitic acid, pyromellitic acid, benzophenonetetracarboxylic acid, trimellitic anhydride, pyromellitic anhydride, benzophenonetetracarboxylic anhydride, trimesic acid, ethylene glycol bis(anhydrotrimellitate), glycerol tris (anhydrotrimellitate), 1,2,3,4-butanetetracarboxylic acid, and the like; but the content of the trifunctional or higher polybasic acid in the polybasic acid components for polyester resin is preferably kept at 5 mole % or less for prevention of gelation of the polyester resin during production.

In addition, a polybasic acid component having a hydrophilic group other than carboxyl and hydroxyl groups such as 5-sodium-sulfoisophthalic acid or the like may be used as the polybasic acid component, but use of the polybasic acid component is preferably avoided, because it often leads to deterioration of the water resistance of the resin film formed from the aqueous dispersion.

Among the polybasic acid components described above, aromatic polybasic acids are preferable; and the content of the aromatic polybasic acid in the polybasic acid components for polyester resin is preferably 50 mole % or more, more preferably 60 mole % or more, and still more preferably 70 mole % or more. Increase in the content of the aromatic polybasic acid leads to increase in the number of aromatic ester bonds, which are more resistant to hydrolysis than aliphatic or alicyclic ester bond, enabling reduction of the deterioration in molecular weight of the polyester resin even when the aqueous dispersion is stored for a long period of time. The increase in the content of aromatic polybasic acid also leads to improvement in the hardness, water resistance, solvent resistance, processability of the resin film formed from the aqueous dispersion.

The aromatic polybasic acid is preferably terephthalic acid or isophthalic acid, which is produced commercially in a large quantity and thus cheaper; and the total content of terephthalic acid and isophthalic acid in the polybasic acid components for polyester resin is preferably 49 mole % or more, more preferably 59 mole % or more, and still more preferably 69 mole % or more.

The content of terephthalic acid in the polybasic acid components for polyester resin is preferably 25 mole % or more, more preferably 45 mole % or more, still more preferably 65 mole % or more, and particularly preferable 85 mole % or more. Increase in the content of terephthalic acid tends to result in improvement in the hardness, solvent resistance of the resin film.

Examples of the polyhydric alcohol components for the polyester resin include aliphatic glycols having 2 to 10 carbons, alicyclic glycols having 6 to 12 carbons, ether bond-containing glycols. Examples of the aliphatic glycol having 2 to 10 carbons include ethylene glycol, 1,2-propanediol, 1,3-propanediol, 1,4-butanediol, 2-methyl-1,3-propanediol, 1,5-pentanediol, neopentylglycol, 1,6-hexanediol, 3-methyl-1,5-pentanediol, 1,9-nonenediol, 2-ethyl-2-butylpropanediol, and the like; examples of the alicyclic glycol having 6 to 12 carbons include 1,4-cyclohexane dimethanol; and examples of the ether bond-containing glycols include diethylene glycol, triethylene glycol, dipropylene glycol, polytetramethylene glycol, polyethylene glycol, polypropylene glycol, and the like. The content of the ether bond-containing glycol in the polyhydric alcohol components for the polyester resin is preferably 10 mole % or less, more preferably 5 mole % or less, because increase in the content of ether bonds may lead to deterioration of water resistance, solvent resistance, weather resistance, of the polyester resin.

An ethylene oxide or propylene oxide adduct of bisphenol (e.g., bisphenol A, bisphenol S, etc.) such as 2,2-bis(4-hydroxyethoxyphenyl)propane or the like may be used as the polyhydric alcohol component.

The polyhydric alcohol is preferably ethylene glycol or neopentyl glycol, which is produced commercially in a large quantity and thus cheaper; and the total content of ethylene glycol and neopentyl glycol in the polyhydric alcohol components for the polyester resin is preferably 50 mole % or more, more preferably 60 mole % or more, still more preferably 70 mole % or more, and particularly preferably 80 mole % or more. Ethylene glycol, which improves in particular the chemical resistance of the resulting resin film, and neopentyl glycol, which improves in particular the chemical resistance thereof, are favorable as the polyhydric alcohol components for the polyester resin.

A trifunctional or higher polyhydric alcohol, such as glycerine, trimethylolethane, trimethylolpropane, pentaerythritol, or the like, may be contained, but the content of the trifunctional or higher polyhydric alcohol in the polyhydric alcohols for polyester resin is preferably kept at 5 mole % or less for prevention of gelation of the polyester resin during production.

The polyester resin may be a copolymer additionally containing a monocarboxylic acid, a monoalcohol, or a hydroxycarboxylic acid, and examples of such comonomers include lauric acid, myristic acid, palmitic acid, stearic acid, oleic acid, linoleic acid, linolenic acid, benzoic acid, p-tert-butylbenzoic acid, cyclohexanoic acid, 4-hydroxyphenylstearic acid, stearyl alcohol, 2-phenoxyethanol, e-caprolactone, lactic acid, β-hydroxybutyric acid, p-hydroxybenzoic acid, and the like.

The polyester resin can be produced by polycondensation of one or more polybasic acid components and one or more polyhydric alcohol components described above according to a known method; and an example thereof is a process of producing a polyester resin by making all monomer components and/or the low-molecular weight polymer thereof react with each other under an inactive atmosphere at 180 to 260°C for approximately 2.5 to 10 hours in an esterification reaction, and then further advancing the polycondensation reaction in the presence of an ester-exchange reaction catalyst at a temperature of 220 to 280°C under a reduced pressure of 130 Pa or lower until the polymer reaches a desired molecular weight.

After the polycondensation reaction, a process, for example, of depolymerization by adding a polybasic acid component or a polyhydric alcohol component under an inactive atmosphere may be employed in order to give the polyester resin a desirable acid or hydroxyl value.

Bubbles generated in the resin during depolymerization may obstruct extrusion into pellets, but in such a case, the resin may be deaerated once again under reduced pressure after depolymerization. The pressure for the deaeration is preferably 67,000 Pa or less and more preferably 10,000 Pa or less. A reduced pressure of higher than 67,000 Pa demands a longer period for deaeration and is thus undesirable.

As a method in which a desired acid value is given to the polyester resin, a process of adding a polybasic acid anhydride additionally after the polycondensation reaction above and allowing the hydroxyl groups of the polyester resin to react in an addition reaction under an inactive atmosphere may be employed.

The polyester resin according to the present invention is preferably a polyester resin depolymerized by using a polybasic acid and/or provided with carboxyl groups in the above addition reaction. Introduction of carboxyl groups by the depolymerization reaction and/or the addition reaction allows easier control of the molecular weight and the acid value of polyester resin. The polybasic acid for use in the reaction is preferably a trifunctional or higher polybasic acid. Use of a trifunctional or higher polybasic acid enables to provide the polyester resin with a desired acid value while suppressing deterioration in the molecular weight of the polyester resin by depolymerization. The use of a trifunctional or higher polybasic acid also enables production of an aqueous dispersion further superior in storage stability, although the detailed mechanism is yet to be understood.

The polybasic acids for use in the depolymerization reaction and/or the addition reaction include those described as the components for the polyester resin, and among them, aromatic polybasic acids are preferable; among aromatic polybasic acids, aromatic dicarboxylic acids such as terephthalic acid, isophthalic acid, and phthalic anhydride and trifunctional polybasic acids such as trimellitic acid and trimellitic anhydride are preferable. In particular, use of trimellitic anhydride, which may lead to simultaneous progress of depolymerization and addition reactions and thus provide the resulting polyester with a desired acid value while suppressing deterioration of the molecular weight of polyester resin by depolymerization as much as possible, is particularly preferable.

In the present invention, the polyester resins may be used alone or as a mixture of two or more.

The content of polyester resin (A) in the aqueous dispersion according to the present invention is 1 to 70 percent by mass, preferably 5 to 60 percent by mass, more preferably 10 to 50 percent by mass, and still more preferably 15 to 40 percent by mass with respect to the total amount of dispersion. An aqueous dispersion containing the polyester resin (A) at a content of more than 70 percent by mass becomes extremely viscous, making itself practically impossible to form a resin film, while that at a content of less than 1 percent by mass is not practical.

The basic compound (B) is explained below.

The aqueous dispersion according to the present invention needs to contain a basic compound. The basic compound neutralizes the carboxyl groups of polyester resin to generate carboxyl anions, and the electrical repulsive force among these anions prevents coagulation of the polyester resin fine particles and provides a stable dispersion.

The basic compound is preferably an organic amine having a boiling point of 250°C or lower, preferably 160°C or lower, or ammonia, from the viewpoint of volatility during resin-film forming. Typical examples of the organic amines preferably used include triethylamine, N,N-diethylethanolamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, dimethylaminopropylamine, methyliminobispropylamine, 3-methoxypropylamine, monoethanolamine, diethanolamine, triethanolamine, morpholine, N-methylmorpholine, N-ethylmorpholine and among them, ammonia, triethylamine, and N,N-dimethylethanolamine are preferably used.

The content of basic compound (B) is not particularly limited as long as the aqueous dispersion according to the present invention has a desired dispersion stability and in particular a favorable storage stability; but when the acid value of polyester resin (A) is designated as E (mg KOH/g) and the equivalence ratio of the basic compound (B) used to the total mole number of the carboxyl groups of polyester resin (A) is designated as F, the basic compound is used preferably in the range represented by the following Formula (1), more preferably in the range represented by the following Formula (2), and still more preferably in the range represented by the following Formula (3). The range represented by Formula (1) is shown in Figure 1.

$$-0.25 \times E + 2.5 \leq F \leq -5 \times E + 50 \quad (1)$$

$$-0.3 \times E + 3.2 \leq F \leq -4.25 \times E + 42 \quad (2)$$

$$-0.375 \times E + 4 \leq F \leq -3.5 \times E + 34 \quad (3)$$

Figure 1 is a drawing showing the relationship of the above Formula (1) between the acid value of polyester resin (A) and the equivalence ratio of basic compound (B) required with respect to the total mole number of the carboxyl groups of polyester resin in the phase-inversion emulsification step. It is understood from Figure 1 that decrease in the acid value of the polyester resin used is associated with increase of the lower limit of the equivalence ratio of basic compound (B) used with respect to the total mole number of the carboxyl groups of polyester resin (A). Specifically, when the acid value of polyester resin is 2 mg KOH/g, the basic compound (B) is preferably used in an amount of two times equivalence or more with respect to the total mole number of the carboxyl groups of polyester resin (A), and when the acid value of polyester resin is around 8 mg KOH/g, the basic compound (B) is preferably used in an amount of approximately 0.5 times equivalence with respect to the total mole number of the carboxyl groups of polyester resin (A), for production of the aqueous dispersion according to the present invention.

The equivalence ratio of basic compound (B) with respect to the total mole number of the carboxyl groups of polyester resin (A) is specifically a value calculated by dividing the mole number of basic compound (B) used by the total mole number of the free carboxyl groups of polyester resin (A). The total mole number of the free carboxyl groups of polyester resin (A) can be calculated from the acid value of the resin.

If F is smaller than "-0.25 x E + 2.5", the aqueous dispersion obtained tends to contain particles having a larger volume-average particle size and thus may be inferior in storage stability. On the other hand, if F is higher than "-5 × E + 50", the aqueous dispersion obtained unfavorably contains the basic compound remaining in a large amount. It is also undesirable, because the polyester resin tends to coagulate and sediment in the solvent removal step described below.

When the basic compound is used in the range above, the content thereof in the aqueous dispersion is usually 0.005 to 10 percent by mass, preferably 0.01 to 8 percent by mass, and more preferably 0.015 to 6 percent by mass.

The water (C) contained in the aqueous dispersion is not particularly limited; and distilled water, ion-exchange water, tap water, industrial water may be used, and distilled water or ion-exchange water is preferable.

The content of water (C) is 10 percent by mass or more, preferably 20 percent by mass or more, and more preferably, 30 percent by mass or more with respect to the total amount of dispersion. A dispersion containing water (C) at a content of less than 10 percent by mass is not an aqueous dispersion any more. The upper limit of the content of water (C) is suitably decided according to the amounts of the components (A), (B), and (D) used.

The aqueous dispersion according to the present invention may contain additionally an organic solvent (D). The content of organic solvent (D) is preferably smaller, because organic solvent may worsen the working environment and damage the substrate on which the dispersion is applied depending on its kind. In the present invention, the content of organic solvent (D) in the aqueous dispersion with respect to the total amount of dispersion is 0 to 85 percent by mass, preferably 0 to 50 percent by mass, more preferably 0 to 30 percent by mass, still more preferably 0 to 10 percent by mass, still more preferably 0 to 1 percent by mass, and most preferably 0 to 0.5 percent by mass. A smaller content of organic solvent (D) seems to be effective in preventing deterioration in the molecular weight of polyester resin when the aqueous dispersion is stored for a long period of time. Specifically, when the content of organic solvent (D) is 0 to 30 percent by mass, the molecular weight retention in the aqueous dispersion favorably becomes 90 % or more; and when the content of organic solvent (D) is 0 to 10 percent by mass, the molecular weight retention in the aqueous dispersion becomes 95 % or more.

A smaller content of organic solvent (D) is associated with smaller change in viscosity depending on ambient temperature and provides an operational advantage of easier control of the thickness of resin film during production. Specifically, when the content of organic solvent (D) is 0 to 10 percent by mass, the difference between the viscosities at 10°C and at 40°C is 10 mPa·S or less.

In the aqueous dispersion according to the present invention, the weight ratio of organic solvent (D) to water (C) contained in the aqueous dispersion "(D)/(C)" is preferably in the range of 0/100 to 100/100. If the ratio of organic solvent (D) to water (C) is in this range above, the aqueous dispersion contains a smaller amount of organic solvent and provides an aqueous dispersion favorable for the working environment. From the same viewpoint, the weight ratio of organic solvent (D) to water (C) "(D)/(C)" is more preferably in the range of 0/100 to 40/100, still more preferably in the range of 0/100 to 15/100, and particularly preferable 0/100 to 1.5/100.

The organic solvents (D) include the organic solvents for use in the dissolving step in the process of producing an aqueous dispersion described below.

The volume-average particle size of the particles in the aqueous dispersion according to the present invention, i.e., the volume-average particle size of the polyester resin dispersed in the aqueous medium containing water (C), is 400 nm or less, preferably 300 nm or less, more preferably 200 nm or less, and particularly preferably 150 nm or less. A polyester resin having a volume-average particle size of more than 400 nm tends to settle down in the aqueous dispersion obtained, deteriorating the storage stability.

The aqueous dispersion according to the present invention does not contain a surfactant, and such dispersion provides a resin film superior in film properties such as water resistance.

An example of the process for producing the aqueous dispersion according to the present invention is explained in detail hereinafter.

The process for producing the aqueous dispersion according to the present invention substantially comprises two steps: a dissolving step and a phase-inversion emulsification step, and may include a solvent removal step if necessary. The dissolving step is a step of dissolving a polyester resin in an organic solvent, and the phase-inversion emulsification step is a step of dispersing the solution of the polyester resin in the organic solvent together with a basic compound in water. The solvent removal step is a step of removing part or all of the organic solvent used in the polyester-resin dissolving step from the obtained aqueous dispersion to outside.

Each of the steps above is explained separately below.

In the dissolving step, a polyester resin is first dissolved in an organic solvent. In the step, the concentration of the polyester resin in the solution obtained is controlled in the range of 10 to 70 percent by mass, preferably in the range of 20 to 60 percent by mass, and more preferably in the range of 30 to 50 percent by mass. A solution having a concentration of the polyester resin in the solution of more than 70 percent by mass becomes highly viscous when mixed with water in the next phase-inversion emulsification step; and an aqueous dispersion produced from such viscous solution tends to have particles having a larger volume-average particle size, being not favorable from the viewpoint of storage stability. A solution having a concentration of the polyester resin of less than 10 percent by mass, which is further diluted in the next phase-inversion emulsification step and demands removal of a large amount of organic solvent in the solvent removal step, is uneconomical. The equipment for dissolving a polyester resin in an organic solvent is not particularly limited if it has a tank to which liquid is supplied and a suitable agitating means. If the polyester resin is less soluble, the solution may be heated.

Any one of publicly known organic solvents may be used as the organic solvent, and examples thereof include ketone organic solvents, aromatic hydrocarbon organic solvents, ether organic solvents, halogen-containing organic solvents, alcohol organic solvents, ester organic solvents, glycol organic solvents. Typical examples of the ketone organic solvents include methylethylketone (2-butanone) (hereinafter, referred to as MEK), acetone, diethylketone (3-pentanone), methylpropylketone (2-pentanone), methylisobutylketone (4-methyl-2-pentanone) (hereinafter, referred to as MIBK), 2-hexanone, 5-methyl-2-hexanone, 2-heptanone, 3-heptanone, 4-heptanone, cyclopentanone, cyclohexanone,. Typical examples of the aromatic hydrocarbon organic solvents include toluene, xylene, benzene, and the like. Typical examples of the ether organic solvents include dioxane, tetrahydrofuran. Typical examples of the halogen-containing organic solvents include carbon tetrachloride, trichloromethane, dichloromethane, and the like. Typical examples of the alcohol organic solvents include methanol, ethanol, n-propanol, isopropanol, n-butanol, isobutanol, sec-butanol, tert-butanol, n-amylalcohol, isoamylalcohol, sec-amylalcohol, tert-amylalcohol, 1-ethyl-1-propanol, 2-methyl-1-butanol, n-hexanol, cyclohexanol. Typical examples of the ester organic solvents include ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate, dimethyl carbonate. Typical examples of the glycol organic solvents include ethylene glycol, ethylene glycol monomethylether, ethylene glycol monoethylether, ethylene glycol monopropylether, ethylene glycol monobutylether, ethylene glycol ethylether acetate, diethylene glycol, diethylene glycol monomethylether, diethylene glycol monoethylether, diethylene glycol monobutylether, diethylene glycol ethylether acetate, propylene glycol, propylene glycol monomethylether, propylene glycol monobutylether, propylene glycol methylether acetate, and the like. Other favorable organic solvents include 3-methoxy-3-methylbutanol, 3-methoxybutanol, acetonitrile, dimethylformamide, dimethylacetamide, diacetone alcohol, ethyl acetoacetate.

These organic solvents may be used alone or in combination of two or more; and for production of the aqueous dispersion according to the present invention, the organic solvent is selected so that the polyester resin can be dissolved at a concentration of 10 percent by mass or more, preferably at a concentration of 20 percent by mass or more, and more preferably at a concentration of 30 percent by mass or more. Favorable examples of the organic solvent include pure solvents such as acetone, MEK, MIBK, dioxane, tetrahydrofuran, and cyclohexanone; mixed solvents such as acetone/ethylene glycol monobutylether mixture solution, MEK/ethylene glycol monobutylether mixture solution, MIBK/ethylene glycol monobutylether mixture solution, dioxane/ethylene glycol monobutylether mixture solution, tetrahydrofuran/ethylene glycol monobutylether mixture solution, cyclohexanone/ethylene glycol monobutylether mixture solution, acetone/isopropanol mixture solution, MEK/isopropanol mixture solution, MIBK/isopropanol mixture solution, dioxane/isopropanol mixture solution, tetrahydrofuran/isopropanol mixture solution, and cyclohexanone/isopropanol mixture solution. When preparing a mixture solution, a polyester resin may be dissolved in a mixed solution previously prepared at a desired mixing ratio, or alternatively, polyester may be first dissolved in an organic solvent that has good solubility to the polyester and another organic solvent is added before the phase-inversion emulsification step described below.

Next in the phase-inversion emulsification step, the polyester resin solution obtained in the dissolving step is mixed with water and a basic compound, and the mixture is then subjected to phase-inversion emulsification. Favorably in the present invention, a basic compound is previously added to the polyester resin solution and then water is added thereto gradually during to carry our the phase-inversion emulsification. Addition of water at a high speed is not economical, because it often results in generation of lumps of the polyester resin that are not dispersible in the aqueous medium any more, reducing the yield of the final aqueous dispersion.

In the present invention, the "phase-inversion emulsification" means a process of adding water to a solution of a polyester resin in an organic solvent in an amount greater than that of the organic solvent contained in the solution and thus converting the system from an organic solvent phase to an O/W emulsion dispersion phase.

The phase-inversion emulsification is carried out at a temperature of 40°C or lower, preferably at 30°C or lower, more preferably at 20°C or lower, and particularly preferably at 15°C or lower. Phase-inversion emulsification at 40°C or lower results in decrease in the volume-average particle size of the particles in the aqueous dispersion obtained, and thus provides an aqueous dispersion superior in storage stability. It is also economical because it suppresses sedimentation of the polyester resin lumps formed by coagulation of the particles in the aqueous dispersion in the solvent removal step described below, consequently leading to increase in yield. The detailed mechanism behind the phenomenon that the phase-inversion emulsification conducted at a relatively lower temperature as above mentioned is effective in producing an aqueous dispersion containing particles having a small volume-average particle size is not clearly understood. Phase-inversion emulsification at a temperature of higher than 40°C results in increase in the volume-average particle size of the particles in the aqueous dispersion and deterioration in storage stability.

It is preferable to keep the temperature throughout the phase-inversion emulsification at 40°C or lower but sometimes difficult to control the temperature of the system, because the liquid temperature often rises due to the shear heat caused by agitation. Even in such a case, the temperature is preferably controlled to 40˚C or lower (not higher than 40˚C) until 0.8 times amount of water is added with respect to the organic solvent contained in the polyester resin solution; more preferably same amount of water , and still more preferably 1.1 times amount of water.

The equipment for phase-inversion emulsification is not particularly limited if it has a tank to which liquid is supplied and a suitable agitating means. Examples of the equipment include those known by persons skilled in the art such as solid-liquid agitators and emulsifiers (for example, homomixer). When using an emulsifier having a greater shear force such as a homomixer, it is preferable to use it while cooling, for prevention of the increase in liquid temperature by the shear heat. The phase-inversion emulsification may be carried our either under normal pressure, reduced pressure, or applied pressure.

The solvent removal step is a step of distilling the organic solvent contained in the aqueous dispersion obtained in the phase-inversion emulsification step and removing part or all of the solvent from the aqueous dispersion. This step may be carried out under reduced pressure or atmospheric pressure. Solvent removal under atmospheric pressure may result in generation of agglomerates, and in such a case, it is preferably carried out under reduced pressure while controlling the internal temperature at 70˚C or lower, preferably at 60˚C or lower, and still more preferably at 50˚C or lower. The equipment for solvent removal is not particularly limited if it has a tank to which liquid is supplied and a suitable agitating means. The solvent removal step after the phase-inversion emulsification step may lead to removal of part or all of the basic compound, which is contained in the aqueous dispersion but not contributing to the neutralization of the polyester resin, remaining therein after the phase-inversion emulsification step.

By the process of production above, the aqueous dispersion according to the present invention is obtained in the uniform and stabilized state in appearance, wherein there is no portion locally different in solids content concentration, for example due to precipitation or phase separation, from other portions in the aqueous medium.

In producing the aqueous dispersion, a filtration step may be added for removal of foreign bodies or the like. In such a case, it is preferable to install, for example, a stainless steel filter of approximately 300 mesh (wire diameter: 0.035 mm, plain woven) and to filter the dispersion under pressure (air pressure: 0.2 MPa).

Methods of using the aqueous dispersion according to the present invention is explained next.

The aqueous dispersion according to the present invention has a superior film-forming ability, and thus, it is possible to form a uniform resin film adhered to various base material surfaces by applying the dispersion on various base material surfaces uniformly by a publicly known film-making methods such as dipping, brush coating, spray coating, curtain flow coating, and the like, setting the resulting film as needed at around room temperature, and heating the film for drying and curing. A hot-air-circulating oven, an infrared ray heater, or the like may be used as the heating device. The heating temperature and the heating time are suitably determined according to the kind of the base material to be coated; but considering economical efficiencies, the heating temperature is preferably 60 to 250˚C, more preferably 70 to 230˚C, and particularly more preferably 80 to 200˚C; and the heating time is preferably 1 second to 30 minutes, more preferably 5 seconds to 20 minutes, and particularly preferably 10 seconds to 10 minutes.

The thickness of the resin film formed by using the aqueous dispersion according to the present invention is suitably selected according to the purpose or application thereof, but preferably 0.01 to 40 $\mu$m, more preferably 0.1 to 30 $\mu$m, and particularly preferably 0.5 to 20 $\mu$m.

The aqueous dispersion according to the present invention may contain as needed a hardening agent, various additives, a compound having a colloid-protecting action, water, an organic solvent, a surfactant, a pigment such as titanium oxide, zinc oxide, carbon black, a dye, another hydrophilic polyester resin, an aqueous resin such as aqueous urethane resin, an aqueous olefin resin, or an aqueous acryl resin.

The hardening agent is not particularly limited if it is reactive with the functional groups of polyester resin: for example, carboxyl group or the anhydride thereof and hydroxyl group; and examples thereof include amino resins such as urea resins, melamine resins, and benzoguanamine resins, multifunctional epoxy compounds, multifunctional isocyanate compounds and the various block isocyanate compounds thereof, multifunctional aziridine compounds, carbodiimide group-containing compounds, oxazoline group-containing polymers, phenol resins and these hardening agents may be used alone or in combination of two or more.

Examples of the additives include a repulsion inhibitor, a leveling agent, an antifoam, an anti-popping agent, a rheology controller, a pigment-disperser, a UV absorbent, a lubricant.

Examples of the compounds having a colloid-protecting action include polyvinylalcohol, carboxymethylcellulose, hydroxyethylcellulose, hydroxypropylcellulose, modified starch, polyvinylpyrrolidone, polyacrylic acid, polymers from vinyl monomers having acrylic acid and/or methacrylic acid as a component, polyitaconic acid, gelatin, gum arabic, casein, swelling mica.

The organic solvents include those used in the dissolving step of the process of producing an aqueous dispersion described above.

The surfactants include all surfactants including anionic surfactants, cationic surfactants, amphoteric surfactants, nonionic surfactants. Examples of the nonionic surfactants include alkylene oxide adducts of alkylphenols such as nonylphenol and octylphenol and alkylene oxide adducts of higher alcohols. Typical examples of the nonionic surfactants include Igepal series products manufactured by Aldrich; and Naroacty series products such as Naroacty N-100, Naroacty N-120, and Naroacty N-140, Sannonic SS series products such as Sannonic SS-120, Sannonic SS-90, and Sannonic SS-70, Sannonic FD series products such as Sannonic FD-140, Sannonic FD-100, and Sannonic FD-80, Sedran FF series products such as Sedran FF-220, Sedran FF-210, Sedran FF-200, and Sedran FF-180, Sedran SNP series products such as Sedran SNP-112, Newpol PE series products such as Newpol PE-64, Newpol PE-74, and Newpol PE-75, and Sanmorin 11, manufactured by Sanyo Kasei.Co., Ltd.

The hardening agent, various additives, compound having a colloid-protecting action, pigment, dye, aqueous resin, or the like may be added previously in any step: polyester resin-dissolving step, phase-inversion emulsification step, or solvent removal step.

Examples

Hereinafter, the present invention will be described more specifically with reference to Examples, but it should be understood that the present invention is not limited by these Examples.

(1) Structure of polyester resins

The structure of polyester resins was determined by using a $^1$H-NMR spectrometer (manufactured by Varian Medical Systems, Inc., 300 MHz). Resins containing constitutional monomers that do not give peaks allowing identification or quantitative determination in the $^1$H-NMR spectrum, were subjected to methanol decomposition in a sealed tube at 230°C for 3 hours and then gas-chromatogram analysis for quantitative analysis.

(2) Acid value of polyester resins

A polyester resin 0.5 g was dissolved in 50 ml of water/dioxane mixture (volume ratio: 1/9); the solution was titrated with KOH by using cresol red as an indicator; and the amount of KOH (mg) consumed in neutralization per g of the polyester resin was used as the acid value.

(3) Hydroxyl value of polyester resins

Three grams of a polyester resin was weighed accurately and mixed with 0.6 ml of acetic anhydride and 50 ml of pyridine; the mixture was allowed to react at room temperature for 48 hour while stirred and then, added with 5 ml of distilled water; and the mixture was then stirred for additional 6 hours at room temperature, converting all acetic anhydride remaining unreacted to acetic acid. To the solution, added was 50 ml of dioxane; the resulting solution was titrated with KOH by using cresol red and thymol blue as indicators; from the amount of KOH consumed in neutralization (W1) and the amount of KOH that would be required for neutralization when the entire amount of acetic anhydride was hydrolyzed to acetic acid without reaction with the polyester resin (calculated value: W0), the difference (W0-W1) was obtained in terms of mg of KOH, and a value obtained by dividing the difference by the weight of the polyester resin (g) was used as the hydroxyl value.

(4) Number-average molecular weight of polyester resins

The number-average molecular weight was determined by using a GPC analyzer (manufactured by Shimadzu Corporation, liquid-feeding unit: LC-10ADvp, and UV-IR spectrometer: SPD-6AV, detection wavelength: 254 nm, solvent: tetrahydrofuran, and calculated as polystyrene). From the GPC analysis, it was possible to determine the weight-average molecular weight of polyester resins and also the degree of dispersion in molecular weight distribution thereof, by dividing the weight-average molecular weight by the number-average molecular weight.

(5) Glass transition temperature of polyester resins

The glass transition temperature (Tg) was determined by using 10 mg of a polyester resin sample, by using a DSC (differential scanning calorimeter) (manufactured by PerkinElmer, Inc., DSC7), measuring the sample under the condition of a programmed temperature speed of 10°C/min, and obtaining the midpoint of the two inflection-point temperatures corresponding to glass transition in the temperature rise curve obtained.

(6) Solids content of aqueous dispersions

Approximately 1 g of an aqueous dispersion was accurately weighed (X g), and the residue (solids content) after the dispersion was dried at 150°C for 2 hours was accurately weighed (Y g); and the solids content concentration was calculated according to the following Formula.

$$\text{Solids content concentration (percent by mass)} = Y \times 100 / X$$

(7) Organic solvent content of aqueous dispersions

The content of organic solvents was determined by injecting an aqueous dispersion diluted with water directly into a gas chromatograph GC-8A manufactured by Shimadzu Corporation, [FID detector, carrier gas: nitrogen, column packing: PEG-HT (5%)-UNIPORT HP (60/80 mesh) (manufactured by GL Science Inc.), column size: 3 mm in diameter x 3 m in length, sample injection temperature: 150°C, column temperature: 60°C, and internal standard substance: N-butanol]. The limit of detection was 0.01 percent by mass.

(8) Storage stability of aqueous dispersions

An aqueous dispersion 30 ml was placed in a 50-ml glass sample bottle and stored at 25°C for 60 days; and change in appearance was examined by visual observation.

(9) Volume-average particle size of the particles in aqueous dispersions

An aqueous dispersion was diluted with water to a concentration of 0.1%, and the volume-average particle size of the particles was determined by using MICROTRAC UPA (Model 9340-UPA) manufactured by Nikkiso Co., Ltd.

(10) Thickness of resin films

The thicknesses of the base material before and after film formation by application of an aqueous dispersion were determined by using a thickness gage (manufactured by Union Tool, MICROFINE$\Sigma$), and the thickness of the resin film was calculated from the difference.

(11) Adhesiveness of resin films

A resin film having a thickness of approximately 1 $\mu$m was formed on a base material by applying an aqueous dispersion on the base material by using a desktop coater (manufactured by Yasuda Seiki Seisakusho., Ltd., Film Applicator No. 542-AB with a bar coater) and heating the base material in an oven at 130°C for 1 minute. Then, an adhesive tape specified in JIS Z1522 (18 mm in width) was placed on the resin film except the edge areas and pressed with an eraser for sufficient adhesion, and the edge of the adhesive tape was peeled off instantaneously in the direction perpendicular to the film. The surface of the adhesive tape peeled off was observed by using a surface infrared spectrometer (SYSTEM 2000, manufactured by PerkinElmer, Inc., using a Ge60° 50×20×2 mm prism) whether the resin film is adhered to the adhesive tape surface, and the adhesion of the resin film onto the base material was evaluated according to the following criteria. The base material used was a biaxially oriented PET film (manufactured by Unitika Ltd., thickness: 12 $\mu$m).
O: No peaks derived from the resin film observable on the adhesive tape surface
×: Peaks derived from the resin film observable on the adhesive tape surface

(12) Water resistance of resin films

An aqueous dispersion was coated on the biaxially oriented PET film above by using a desktop coater, and the film was heated in an oven at 130°C for 1 minute, to give a resin film having a thickness of approximately 1 $\mu$m; and the PET film with the resin film formed thereon was immersed in hot water at 80°C, withdrawn gradually after 10 minutes, and dried in air. The appearance of the resin film was examined by visual observation and classified according to the following criteria.

O: No change in appearance observable

△: Partial whitening, causing practical problems

×: Whitening all over the resin film.

(13) Solvent resistance of resin films

An aqueous dispersion was coated on the biaxially oriented PET film above by using a desktop coater; the film was heated in an oven at 130°C for 1 minutes, to give a resin film having a thickness of approximately 1 μm; the PET -film carrying the resin film was immersed in ethanol at 25°C, withdrawn gradually after 10 minutes, and dried in air. The appearance of the resin film was examined by visual observation and classified according to the following criteria.

O: No change in appearance observable

x: Partial whitening and dissolution observable

(14) Molecular weight retention of aqueous dispersions

An aqueous dispersion was stored at 25°C for 60 days; then the aqueous dispersion was vacuum dried at 40°C for 24 hours, to give resin components; the number-average molecular weight thereof was determined in a similar manner to (4) by GPC analysis; from the number-average molecular weight (G) and the number-average molecular weight of polyester resin (H) used for the aqueous dispersion shown in TABLE 1, the molecular weight retention was calculated according to the following Formula.

$$\texttt{Molecular weight retention (\%) = G} \times \texttt{100 / H}$$

(15) Viscosity of aqueous dispersions

The rotational viscosities of an aqueous dispersion at 10°C and 40°C were respectively determined by using DVL-BII digital viscometer (Model B viscometer) manufactured by Tokimek Inc.

(16) Processability of resin films

An aqueous dispersion was coated on a metal plate (tin-free steel plate) of 0.19 mm in thickness by using a desktop coater; and the plate was heated in an oven at 200°C for 3 minutes, to give a resin film having a thickness of 3 μm. The metal plate obtained was bent together with a stack of several metal plates having the same thickness in a pressing machine in such a manner that the resin film become outside the bent plates. Presence of clacks in the bent area of the resin film was examined by visual observation. By repeating the tests while changing the number of metal plates placed in the bent area, the minimum plate number n at which the crack is not generated was determined and used as an indicator of processability and designated as nT. A smaller n indicates better processability.

Polyester resins used in Examples and Comparative Examples were prepared as follows.

(Polyester resin P-1)

A mixture of 2,492 g of terephthalic acid, 415 g of isophthalic acid, 1,516 g of sebacic acid, 1,210 g of ethylene glycol, and 1,484 g of neopentyl glycol was heated in an autoclave at 250°C for 4 hours, allowing an esterification reaction to proceed. Then, after addition of 3.3 g of zinc acetate dihydrate as a catalyst, the temperature of the system was raised to 270°C and the pressure of the system gradually reduced to 13 Pa in a period of 1.5 hours. The mixture was allowed to proceed in the polycondensation reaction under the same condition for additional 4 hours, and after the system was brought back to normal pressure with a nitrogen gas and the temperature to lower to 265°C, 29 g of trimellitic anhydride was added, and the mixture was additionally stirred at 265°C for 2 hours, allowing a depolymerization reaction to proceed. Then, the system was repressurized with a nitrogen gas, and the resulting resin was extruded into a sheet shape and cooled at room temperature, to give a sheet-shaped polyester resin P-1.

(Polyester resin P-2)

A mixture of 2,077 g of terephthalic acid, 2,077 g of isophthalic acid, 1,125 g of polytetrahydrofuran 1000, 1,510 g of neopentyl glycol, and 1,358 g of ethylene glycol was heated in an autoclave at 240°C for 4 hours, allowing an esterification reaction to proceed. Then, after addition of 12.8 g of tetra-n-butyl titanate as a catalyst, the temperature,

of the system was raised to 255˚C, and the pressure of the system gradually reduced to 13 Pa in a period of 1.5 hours. The mixture was allowed to proceed in the polycondensation reaction under the same condition for additional 4 hours, and after the system was brought back to normal pressure with a nitrogen gas and the temperature to lower to 250˚C, 31 g of trimellitic anhydride was added, and the mixture was stirred at 250˚C for 2 hours allowing a depolymerization reaction to proceed. Then, the system was repressurized with a nitrogen gas, and the resulting resin was extruded into a sheet shape and cooled at room temperature, to give a sheet-shaped polyester resin P-2.

(Polyester resin P-3)

A mixture of 1,246 g of terephthalic acid, 1,246 g of isophthalic acid, 1,195 g of ethylene glycol, 1,510 g of neopentyl glycol, and 1,461 g of adipic acid was heated in an autoclave at 240˚C for 4 hours, allowing an esterification reaction to proceed. Then, after addition of 2.9 g of antimony trioxide as a catalyst, the temperature of the system was raised to 270˚C and the pressure of the system gradually reduced to 13 Pa in a period of 1.5 hours. The mixture was allowed to proceed in the polycondensation reaction under the same condition for additional 5 hours, and after the system was brought back to normal pressure with a nitrogen gas and the temperature to lower to 260˚C, 32 g of trimellitic acid was added, and the mixture was stirred at 260˚C for 2 hours allowing a depolymerization reaction to proceed. Then, the system was repressurized with a nitrogen gas, and the resulting resin was extruded into a sheet shape and cooled at room temperature, to give a sheet-shaped polyester resin P-3.

(Polyester resin P-4)

A mixture of 2,492 g of terephthalic acid, 415 g of isophthalic acid, 1,516 g of sebacic acid, 1,210 g of ethylene glycol, and 1,484 g of neopentyl glycol was heated in an autoclave at 250˚C for 4 hours, allowing an esterification reaction to proceed. Then, after addition of 3.3 g of zinc acetate dihydrate as a catalyst, the temperature of the system was raised to 270˚C, and the pressure of the system gradually reduced to 13 Pa in a period of 1.5 hours. The mixture was allowed to proceed in the polycondensation reaction under the same condition for additional 4 hours, and after the system was brought back to normal pressure with a nitrogen gas and the temperature to room temperature, the resulting resin was extruded into a sheet shape and cooled at room temperature, to give a sheet-shaped polyester resin P-4.

(Polyester resin P-5)

A mixture of 2,077 g of terephthalic acid, 2,077 g of isophthalic acid, 1,102 g of ethylene glycol, and 1,666 g of neopentyl glycol was heated in an autoclave at 240˚C for 4 hours, allowing an esterification reaction to proceed. Then, after addition of 3.3 g of zinc acetate as a catalyst, the temperature of the system was raised to 265˚C, and the pressure of the system gradually reduced to 13 Pa in a period of 1.5 hours. The mixture was allowed to proceed in the polycondensation reaction under the same condition for additional 4 hours, and after the system was brought back to normal pressure with a nitrogen gas and the temperature was lowered to 260˚C, 29 g of trimellitic anhydride was added, and the mixture was stirred at 260˚C for 2 hours allowing a depolymerization reaction to proceed. Then, the pressure of the system is lowered gradually to 13 Pa in a period of 0.5 hour, and the mixture was degassed for 1 hour. Then, the system was repressurized with a nitrogen gas, and the resulting resin was extruded into a strand shape, water-cooled, and cut into pieces, to give a pellet-shaped polyester resin P-5 (about 3 mm in diameter, and about 3 mm in length).

(Polyester resin P-6)

A mixture of 2,907 g of terephthalic acid, 1,246 g of isophthalic acid, 1,133 g of ethylene glycol, and 1,614 g of neopentyl glycol was heated in an autoclave at 260˚C for 4 hours, allowing an esterification reaction to proceed. Then, after addition of 1.8 g of antimony trioxide as a catalyst, the temperature of the system was raised to 280˚C and the pressure of the system gradually reduced to 13 Pa in a period of 1.5 hours. The mixture was allowed to proceed in the polycondensation reaction under the same condition for additional 4 hours, and after the system.was brought back to normal pressure with a nitrogen gas and the temperature was lowered to 250˚C, 53 g of trimellitic acid was added, and the mixture was stirred at 250˚C for 2 hours allowing a depolymerization reaction to proceed. Then, the pressure of the system is lowered gradually to 13 Pa in a period of 0.5 hour, and the mixture was degassed for 1 hour. Then, the system was repressurized with a nitrogen gas, and the resulting resin was extruded into a strand shape, water-cooled, and cut into pieces, to give a pellet-shaped polyester resin P-6 (about 3 mm in diameter, and about 3 mm in length).

(Polyester resin P-7)

A mixture of 4,153 g of terephthalic acid, 388 g of ethylene glycol, and 2,568 g of 1,2-propanediol was heated in an autoclave at 240°C for 3 hours, allowing an esterification reaction to proceed. Then, after addition of 5.1 g of tetra-n-butyl titanate as a catalyst, the temperature was kept at 240°C and the pressure of the system gradually reduced to 13 Pa in a period of 1.5 hours. The mixture was allowed to proceed in the polycondensation reaction under the same condition for additional 6 hours, and the system was repressurized with a nitrogen gas, and the resulting resin was extruded into a strand shape, water-cooled, and cut into pieces, to give a pellet-shaped polyester resin P-7 (about 3 mm in diameter, and about 3 mm in length).

(Polyester resin P-8)

A mixture of 2,907 g of terephthalic acid, 1,246 g of isophthalic acid, 1,133 g of ethylene glycol, and 1,614 g of neopentyl glycol was heated in an autoclave at 260°C for 4 hours, allowing an esterification reaction to proceed. Then, after addition of 1.8 g of antimony trioxide as a catalyst, the temperature of the system was raised to 280°C and the pressure of the system gradually reduced to 13 Pa in a period of 1.5 hours. The mixture was allowed to proceed in the polycondensation reaction under the same condition additionally for 4 hours, and the system was repressurized with a nitrogen gas, and the resulting resin was extruded into a strand shape, water-cooled, and cut into pieces, to give a pellet-shaped polyester resin P-8 (about 3 mm in diameter, and about 3 mm in length).

(Polyester resin P-9)

A mixture of 2,907 g of terephthalic acid, 1,246 g of isophthalic acid, 1,133 g of ethylene glycol, and 1,614 g of neopentyl glycol was heated in an autoclave at 260°C for 4 hours, allowing an esterification reaction to proceed. Then, after addition of 1.8 g of antimony trioxide as a catalyst, the temperature of the system was raised to 280°C and the pressure of the system gradually reduced to 13 Pa over a period of 1.5 hours. The mixture was allowed to proceed in the polycondensation reaction under the same condition additionally for 6 hours, and after the system was brought back to normal pressure with a nitrogen gas and the temperature to 250°C, 79 g of trimellitic acid was added, and the mixture was stirred at 250°C for 2 hours allowing a depolymerization reaction to proceed. Then, the system was repressurized with a nitrogen gas, and the resulting resin was extruded into a sheet shape. The resulting sheet was cooled sufficiently to room temperature and then pulverized in a crusher. Granular resin collected by screening with a sieve having an opening of 1 to 6 mm was designated as granular polyester resin P-9.

(Polyester resin P-10)

A mixture of 2,907 g of terephthalic acid, 1,246 g of isophthalic acid, 1,133 g of ethylene glycol, and 1,614 g of neopentyl glycol was heated in an autoclave at 260°C for 4 hours, allowing an esterification reaction to proceed. Then, after addition of 1.8 g of antimony trioxide as a catalyst, the temperature of the system was raised to 280°C and the pressure of the system gradually reduced to 13 Pa in a period of 1.5 hours. The mixture was allowed to proceed in the polycondensation reaction under the same condition additionally for 6 hours, and after the system was brought back to normal pressure with a nitrogen gas and the temperature of the system was lowered to 250°C, 289 g of trimellitic acid was added, and the mixture was stirred at 250°C for 2 hours allowing a depolymerization reaction to proceed. Then, the system was repressurized with a nitrogen gas, and the resulting resin was extruded into a sheet shape. The resulting sheet was cooled sufficiently to room temperature and then pulverized in a crusher. Granular resin collected by screening with a sieve having an opening of 1 to 6 mm was designated as granular polyester resin P-10.
Results of the analysis and evaluation of the properties of the polyester resins thus obtained are summarized in TABLE 1.

TABLE 1

| Constitution of polyester resin | | | P-1 | P-2 | P-3 | P-4 | P-5 | P-6 | P-7 | P-8 | P-9 | P-10 |
|---|---|---|---|---|---|---|---|---|---|---|---|---|
| Polyester resin (name) | | | | | | | | | | | | |
| Depolymerization agent [a] (mole ratio) | | | TMAA(0.6) | TMAA(0.65) | TMA(0.6) | – | TMAA(0.6) | TMA(1.0) | – | – | TMA(1.5) | TMA(5.5) |
| Acid component [a] (mole ratio) | TPA | | 60 | 50 | 30 | 60 | 50 | 70 | 100 | 70 | 70 | 70 |
| | IPA | | 10 | 50 | 30 | 10 | 50 | 30 | – | 30 | 30 | 30 |
| | SEA | | 30 | – | – | 30 | – | – | – | – | – | – |
| | ADA | | – | – | 40 | – | – | – | – | – | – | – |
| | TM [b] | | 0.6 | 0.65 | 0.6 | – | 0.6 | 1.0 | – | – | 1.5 | 5.5 |
| | total | | 100.6 | 100.65 | 100.6 | 100 | 100.6 | 101 | 100 | 100 | 101.5 | 105.5 |
| Alcohol component [a] (mole ratio) | EG | | 50 | 46.5 | 50 | 50 | 50 | 45 | 20 | 45 | 45 | 45 |
| | NPG | | 50 | 49 | 50 | 50 | 50 | 55 | – | 55 | 55 | 55 |
| | PG | | – | – | – | – | – | – | 80 | – | – | – |
| | PTMG | | – | 4.5 | – | – | – | – | – | – | – | – |
| | total | | 100 | 100 | 100 | 100 | 100 | 100 | 100 | 100 | 100 | 100 |
| Acid value (mgKOH/g) | | | 4.3 | 4.1 | 5.3 | 2.5 | 4.2 | 7.9 | 4.5 | 1.0 | 12.1 | 40.5 |
| Hydroxyl value (mgKOH/g) | | | 2.1 | 2.3 | 2.3 | 3.2 | 1.8 | 0.8 | 4.6 | 4.2 | 0.7 | 0.5 |
| Number average molecular weight | | | 18300 | 16200 | 17100 | 21200 | 17900 | 14300 | 13000 | 18400 | 7800 | 3600 |
| Glass transition temperature (°C) | | | 9 | 18 | 7 | 9 | 65 | 66 | 83 | 66 | 66 | 62 |

a) TPA: terephthalic acid; IPA: isophthalic acid; SEA: sebacic acid; ADA: adipic acid; TMA: trimellitic acid; TMAA: trimellitic acid anhydride; EG: ethylene glycol; NPG: neopentyl glycol; PG: 1,2-propanediol; PTMG: poly(tetramethylene glycol) 1000

b) total amount of trimellitic acid component and trimellitic acid anhydride component

(Example 1)

[Dissolving step] In a 3-L polyethylene container placed were 500 g of polyester resin P-1 and 500 g of MEK, and the mixture was stirred by a stirrer (MAZELA 1000, manufactured by Tokyo Rikakikai Co.,Ltd.) while the container was heated with hot water at approximately 60°C until the polyester resin was completely dissolved in MEK, to give a polyester resin solution at a solids content concentration of 50 percent by mass.

[Phase-inversion emulsification step] Then, 500 g of the polyester resin solution was placed in a jacketed glass container (internal capacity: 2L) and stirred (rotational velocity: 600 rpm) with a stirrer (MAZELA 1000, manufactured by Tokyo Rikakikai Co.,Ltd.) while the temperature inside the system was kept at 13˚C by supplying cold water to the jacket. Then, 29.1 g of a basic compound, triethylamine was added thereto while the solution was stirred, and 470.9 g of distilled water at 13˚C was added at a velocity of 100 g/min. During the entire period of adding the distilled water, the temperature inside the system was kept at 15˚C or lower. After addition of distilled water, the solution was stirred for 30 minutes, to give an aqueous dispersion having a solids content concentration of 25 percent by mass.

(Example 2)

[Dissolving step] In a 3-L polyethylene container, placed were 400 g of polyester resin P-1 and 600 g of MEK, and the mixture was stirred by a stirrer (MAZELA 1000, manufactured by Tokyo Rikakikai Co.,Ltd.) while the container was.heated with hot water at approximately 60˚C until the polyester resin was completely dissolved in MEK, to give a polyester resin solution having a solids content concentration of 40 percent by mass.
[Phase-inversion emulsification step] Then, 500 g of the polyester resin solution was placed in a jacketed glass container (internal capacity: 2L) and stirred (rotational velocity: 600 rpm) with a stirrer (MAZELA 1000, manufactured by Tokyo Rikakikai Co.,Ltd.) while the temperature inside the system was kept at 13˚C by supplying cold water to the jacket. Then, 23.3 g of a basic compound, triethylamine, was added thereto while the solution was stirred, and 476.7 g of distilled water at 13˚C was added at a rate of 100 g/min. During the entire period of adding the distilled water, the temperature inside the system was kept at 15˚C or lower. After addition of distilled water, the solution was stirred for 30 minutes, to give an aqueous dispersion having a solids content concentration of 20 percent by mass.

(Example 3)

[Dissolving step] In a 3-L polyethylene container, placed were 400 g of polyester resin P-1 and 480 g of MEK, and the mixture was stirred by a stirrer (MAZELA 1000, manufactured by Tokyo Rikakikai Co.,Ltd.) while the container was heated with hot water at approximately 60˚C until the polyester resin was completely dissolved in MEK; then, 120 g of ethylene glycol monobutylether was added thereto; and the solution was stirred additionally for about 10 minutes, to give a solution containing of 40 percent by mass polyester resin, 48 percent by mass MEK, and 12 percent by mass ethylene glycol monobutylether.
[Phase-inversion emulsification step] Then, 500 g of the polyester resin solution was placed in a jacketed glass container (internal capacity: 2L) and stirred (rotational velocity: 600 rpm) with a stirrer (MAZELA 1000, manufactured by Tokyo Rikakikai Co.,Ltd.) while the temperature inside the system was kept at 13˚C by supplying cold water to the jacket. Then, 23.3 g of a basic compound, triethylamine, was added thereto while the solution was stirred, and 476.7 g of distilled water at 13˚C was added at a rate of 100 g/min. During the entire period of adding the distilled water, the temperature inside the system was kept at 15˚C or lower. After addition of distilled water, the solution was stirred for 30 minutes, to give an aqueous dispersion having a solids content concentration of 20 percent by mass.

(Example 4)

[Solvent removal step] In a 2-L flask placed were 800 g of the aqueous dispersion of Example 1 and 115.4 g of distilled water; and the solvent therein was removed under reduced pressure while the inside temperature was controlled to be 50˚C or lower. The solvent removal was terminated when the amount of distillate reached approximately 300 g, and the residue was cooled to room temperature and filtered through a 300-mesh stainless steel filter. After determination of the solids content concentration of the aqueous dispersion, distilled water was added to the dispersion until the solids content concentration became 30 percent by mass, to give an aqueous dispersion.

(Example 5)

[Solvent removal step] In a 2-L flask were placed 800 g of the aqueous dispersion of Example 2 and 52.3 g of distilled water; and the solvent removal was carried out under reduced pressure while the liquid temperature was controlled to be 50˚C or lower. The solvent removal was terminated when the amount of distillate reached approximately 360 g, and the residue was cooled to room temperature and filtered through a 300-mesh stainless steel filter. After determination of the solids content concentration of the aqueous dispersion, distilled water was added to the dispersion until the solids content concentration became 30 percent by mass, to give an aqueous dispersion.

(Example 6)

[Solvent removal step] In a 2-L flask were placed 800 g of the aqueous dispersion of Example 3 and 52.3 g of distilled water; and the solvent removal was carried out under reduced pressure while the inside temperature was controlled to be 50˚C or lower. The solvent removal was terminated when the amount of distillate reached approximately 360 g, and the residue was cooled to room temperature and filtered through a 300-mesh stainless steel filter. After determination of the solids content concentration of the aqueous dispersion, distilled water was added to the dispersion until the solids content concentration became 30 percent by mass, to give an aqueous dispersion.

(Example 7),

[Solvent removal step] In a 2-L flask were placed 800 g of the aqueous dispersion of Example 2 and 52.3 g of distilled water; and the solvent removal was carried out under normal pressure. The solvent removal was terminated when the amount of distillate reached approximately 360 g, and the residue was cooled to room temperature and filtered through a 300-mesh stainless steel filter. After determination of the solids content concentration of the aqueous dispersion, distilled water was added to the dispersion until the solids content concentration became 30 percent by mass, to give an aqueous dispersion.

(Example 8)

An aqueous dispersion was prepared in a similar manner to Example 5, except that the basic compound was replaced with 20.5 g of dimethylaminoethanol and 479.5 g of distilled water was added in the phase-inversion emulsification step.

(Example 9)

An aqueous dispersion was prepared in a similar manner to Example 5, except that the polyester resin was replaced with polyester P-2, 22.2 g of triethylamine was added, and 477.8 g of distilled water was added in the phase-inversion emulsification step.

(Example 10)

An aqueous dispersion was prepared in a similar manner to Example 5, except that the polyester resin was replaced with of polyester P-3, 22.9 g of triethylamine was added, and 477.1 g of distilled water was added in the phase-inversion emulsification step.

(Example 11)

An aqueous dispersion was prepared in a similar manner to Example 5, except that the polyester resin was replaced with of polyester P-4, 22.5 g of triethylamine was added, and 477.5 g of distilled water was added in the phase-inversion emulsification step.

(Example 12)

An aqueous dispersion was prepared in a similar manner to Example 5, except that the polyester resin was replaced with of polyester P-5, 22.7 g of triethylamine was added, and 477.3 g of distilled water was added in the phase-inversion emulsification step.

(Example 13)

An aqueous dispersion was prepared in a similar manner to Example 5, except that the polyester resin was replaced with of polyester P-6, 8.5 g of triethylamine was added, and 491.5 g of distilled water was added in the phase-inversion emulsification step.

(Example 14)

An aqueous dispersion was prepared in a similar manner to Example 5, except that the polyester resin was replaced with of polyester P-7, 22.7 g of triethylamine was added, and 477.3 g of distilled water was added in the phase-inversion emulsification step.

(Comparative Example 1)

An experiment similar to the procedure in Example 2 was carried out without addition of triethylamine, but an aqueous dispersion was not obtained because of tangling of the polyester resin with the stirring blades during addition of distilled water.

(Comparative Example 2)

An aqueous dispersion was prepared in a similar manner to Example 5, except that the amount of triethylamine used was changed to 1.9 g and the amount of distilled water added in the phase-inversion emulsification step to 498.1 g.

(Comparative Example 3)

An aqueous dispersion was prepared in a similar manner to Example 5, except that the amount of triethylamine used was changed to 62.0 g and the amount of distilled water added in the phase-inversion emulsification step to 438.0 g, but an aqueous dispersion was not obtained due to coagulation of the resulting polyester resin during solvent removal.

(Comparative Example 4)

[Dissolving step] In a 3-L polyethylene container placed were 400 g of polyester resin P-1 and 600 g of MEK, and the mixture was stirred with a stirrer (MAZELA 1000, manufactured by Tokyo Rikakikai Co.,Ltd.) while the container was heated with hot water at approximately 60˚C until the polyester resin was completely dissolved in MEK, to give a polyester resin solution at a solids content concentration of 40 percent by mass.

[Phase-inversion emulsification step] Then, 500 g of the polyester resin solution was placed in a jacketed glass container (internal capacity: 2L) and stirred (rotational velocity: 600 rpm) with the stirrer (MAZELA 1000, manufactured by Tokyo Rikakikai Co.,Ltd.) while the temperature of the system was kept at 13˚C by supplying cold water to the jacket. Then, 23.3 g of a basic compound, triethylamine, and 15 g of a surfactant Naroacty N160 (manufactured by Sanyo Chemical Industries, Ltd.) were added thereto while the solution was stirred, and 476.7 g of distilled water at 13˚C was added at a rate of 100 g/min. During the entire period of adding the distilled water, the temperature of the system was kept at 15˚C or lower. After addition of distilled water, the solution was stirred for 30 minutes, to give an aqueous dispersion having a solids content concentration of 21 percent by mass.

[Solvent removal step] Then, in a 2-L flask were placed 800 g of the aqueous dispersion of Example 1 and 52.3 g of distilled water; and the solvent therein was removed under reduced pressure while the inside temperature was controlled to be 50˚C or lower. The solvent removal was terminated when the amount of distillate reached approximately 360 g, and the residue was cooled to room temperature and filtered through a 300-mesh stainless steel filter. After determination of the solids content concentration of the aqueous dispersion, distilled water was added to the aqueous dispersion until the solids content concentration became 30 percent by mass, to give the aqueous dispersion.

(Comparative Example 5)

An aqueous dispersion was prepared in a similar manner to Example 2, except that the polyester resin was replaced with of polyester P-8, 5.4 g of triethylamine was added and 494.6 g of distilled water was added in the phase-inversion emulsification step; but an aqueous dispersion was not obtained due to tangling of the resulting polyester resin with stirring blades during addition of distilled water.

(Comparative Example 6)

An aqueous dispersion was prepared in a similar manner to Example 5, except that the polyester resin was replaced with polyester P-9, 8.7 g of triethylamine was added, and 491.3 g of distilled water was added in the phase-inversion emulsification step.

(Comparative Example 7)

An aqueous dispersion was prepared in a similar manner to Example 5, except that the polyester resin was replaced with of polyester P-10, 14.6 g of triethylamine was added, and 485.4 g of distilled water was added in the phase-inversion emulsification step.

(Comparative Example 8)

[Dissolving step] In a 3-L polyethylene container placed were 400 g of polyester resin P-1 and 600 g of MEK, and the mixture was stirred by a stirrer (MAZELA 1000, manufactured by Tokyo Rikakikai Co.,Ltd.) while the container was heated with hot water at approximately 60˚C until the polyester resin was completely dissolved in MEK, to give a polyester resin solution having a solids content concentration of 40 percent by mass.

[Phase-inversion emulsification step] Then, 500 g of the polyester resin solution was placed in a jacketed glass container (internal capacity: 2L) and stirred (rotational velocity: 600 rpm) with the stirrer (MAZELA 1000, manufactured by Tokyo Rikakikai Co.,Ltd.) while the temperature of the system was kept at 45 to 50˚C by supplying cold water to the jacket. Then, 23.3 g of a basic compound, triethylamine, was added thereto while the solution was stirred, and 476.7 g of distilled water at 46˚C was added at a rate of 100 g/min. During the entire period of adding the distilled water, the temperature of the system was kept at 45 to 50˚C. After addition of distilled water, the solution was additionally stirred for 30 minutes, to give an aqueous dispersion having a solids content concentration of 20 percent by mass.

[Solvent removal step] Then, in a 2-L flask were placed 800 g of the aqueous dispersion above and 52.3 g of distilled water; and the solvent therein was removed under reduced pressure while the inside temperature was controlled to be 50˚C or lower, but an aqueous dispersion was not obtained due to coagulation of the polyester resin in the solvent removal step. Accordingly, the dispersion before solvent removal was used for evaluation.

Evaluation results of each of the polyester resin dispersions of Examples and Comparative Examples, including equivalence ratio of the basic compound to the total mole number of the carboxyl groups of the polyester resin, left and right side values of Formula (1), acid value of the polyester resin, organic solvent content of the aqueous dispersion obtained, volume-average particle size, and storage stability, are summarized in TABLE 2. The organic solvent content of the dispersions from which the solvent was not removed was calculated form the amount supplied in the phase-inversion emulsification step, while that of the dispersions from which the solvent was removed represents the content determined from the results by gas chromatography measurement.

Evaluation results of the resin films formed from respective aqueous dispersions including adhesion, water resistance, solvent resistance, the molecular weight retention of the aqueous dispersion, viscosities at 10˚C and 40˚C, and processability are summarized in TABLE 3. No data are shown in TABLES 2 and 3 for Comparative Examples 1, 3, and 5 where aqueous dispersions were not obtained.

TABLE 2

| | Equivalence ratio of the basic compound※ | Acid value of the polyester resin (mgKOH/g) | Left side of formula (1) | Right side of formula (1) | Organic solvent content of the aqueous dispersion (% by mass) | Aqueous dispersion | |
|---|---|---|---|---|---|---|---|
| | | | | | | Volume-average particle size (nm) | Storage stability |
| Example 1 | 15 | 4.3 | 1.425 | 28.5 | 25 | 140 | no change |
| Example 2 | 15 | 4.3 | 1.425 | 28.5 | 30 | 102 | no change |
| Example 3 | 15 | 4.3 | 1.425 | 28.5 | 30 | 94 | no change |
| Example 4 | 15 | 4.3 | 1.425 | 28.5 | no detection | 140 | no change |
| Example 5 | 15 | 4.3 | 1.425 | 28.5 | no detection | 102 | no change |
| Example 6 | 15 | 4.3 | 1.425 | 28.5 | 6 | 94 | no change |
| Example 7 | 15 | 4.3 | 1.425 | 28.5 | no detection | 133 | no change |
| Example 8 | 15 | 4.3 | 1.425 | 28.5 | no detection | 110 | no change |
| Example 9 | 15 | 4.1 | 1.475 | 29.5 | no detection | 98 | no change |

(continued)

| | Equivalence ratio of the basic compound※ | Acid value of the polyester resin (mgKOH/g) | Left side of formula (1) | Right side of formula (1) | Organic solvent content of the aqueous dispersion (% by mass) | Aqueous dispersion | |
|---|---|---|---|---|---|---|---|
| | | | | | | Volume-average particle size (nm) | Storage stability |
| Example 10 | 12 | 5.3 | 1.175 | 23.5 | no detection | 85 | no change |
| Example 11 | 25 | 2.5 | 1.875 | 37.5 | no detection | 150 | no change |
| Example 12 | 15 | 4.2 | 1.45 | 29 | no detection | 105 | no change |
| Example 13 | 3 | 7.9 | 0.525 | 10.5 | no detection | 60 | no change |
| Example 14 | 14 | 4.5 | 1.375 | 27.5 | no detection | 98 | no change |
| Comparative Example 2 | 1.23 | 4.3 | 1.425 | 28.5 | no detection | 430 | ※※ |
| Comparative Example 4 | 15 | 4.3 | 1.425 | 28.5 | no detection | 150 | no change |
| Comparative Example 6 | 2 | 12.1 | - | - | no detection | 78 | no change |
| Comparative Example 7 | 1 | 40.5 | - | - | no detection | 58 | no change |
| Comparative Example 8 | 15 | 4.3 | 1.425 | 28.5 | no detection | 1320 | ※※ |

※ Ratio to the total mole number of the carboxyl groups of the polyester resin

※※ Resin settled in one week to separate into two phases

TABLE 3

| | Resin film | | | | Aqueous dispersion | | |
|---|---|---|---|---|---|---|---|
| | Adhesion | Water resistance | Solvent resistance | Processability | Molecular weight retention (%) | Viscosity (mPa·S) | |
| | | | | | | 10˚C | 40˚C |
| Example 1 | O | O | O | 0T | 94.0 | 111 | 76 |
| Example 2 | O | O | O | 0T | 91.8 | 89 | 55 |
| Example 3 | O | O | O | 0T | 92.9 | 95 | 61 |
| Example 4 | O | O | O | 0T | 97.8 | 8 | 4 |
| Examples 5 | O | O | O | 0T | 97.8 | 9 | 4 |
| Example 6 | O | O | O | 0T | 96.2 | 10 | 5 |
| Example 7 | O | O | O | 0T | 95.6 | 8 | 4 |
| Example 8 | O | O | O | 0T | 96.2 | 9 | 4 |

(continued)

| | Resin film | | | | Aqueous dispersion | | |
|---|---|---|---|---|---|---|---|
| | Adhesion | Water resistance | Solvent resistance | Processability | Molecular weight retention (%) | Viscosity (mPa·S) | |
| | | | | | | 10˚C | 40˚C |
| Example 9 | O | O | O | 0T | 95.7 | 9 | 4 |
| Example 10 | O | O | O | 0T | 96.5 | 10 | 6 |
| Example 11 | O | O | O | 0T | 95.8 | 10 | 5 |
| Example 12 | O | O | O | 1T | 98.9 | 16 | 10 |
| Example 13 | O | O | O | 1T | 96.5 | 18 | 12 |
| Example 14 | O | O | O | 2T | 98.5 | 12 | 7 |
| Comparative Example 2 | O | O | O | 0T | - | - | - |
| Comparative Example 4 | O | × | × | 0T | - | - | - |
| Comparative Example 6 | O | O | O | 5T | - | - | - |
| Comparative Example 7 | × | × | O | 12T | - | - | - |
| Comparative Example 8 | O | O | O | 0T | - | - | - |
| Note) Processability except for Examples 1-3 was evaldated with respect to aqueous dispersion immediately after phase-inversion emulsification step (before solvent removal step). | | | | | | | |

It is apparent from the results in Examples and Comparative Examples above that the polyester resin aqueous dispersion according to the present invention is superior in storage stability and the resin film formed therefrom is superior in adhesiveness to the base materials, water resistance, solvent resistance, and processability. It is also apparent that the polyester resin aqueous dispersion according to the present invention has high molecular weight retention and smaller difference between the viscosities at 10˚C and 40˚C when the organic solvent content is smaller. The results also revealed that phase-inversion emulsification at a temperature of higher than 40˚C may prohibit production of an aqueous dispersion superior in storage stability. The results also revealed that presence of a basic compound at a ratio outside the range specified by Formula (1) in the phase-inversion emulsification step may prohibit production of an aqueous dispersion or provide an aqueous dispersion inferior in storage stability even if produced.

**Claims**

1.   A polyester resin aqueous dispersion, comprising:

a polyester resin (A) having an acid value of 2 mg KOH/g or more and less than 8 mg KOH/g and a number-average molecular weight of 5,000 or more; a basic compound (B);
and water (C), wherein the content of the polyester resin (A) is 1 to 70 percent by mass, the content of water (C) is 10 percent by mass or more, the volume-average particle size of the particles in the polyester resin aqueous dispersion is 400 nm or less, and no surfactant is contained.

2.   The polyester resin aqueous dispersion according to Claim 1, further comprising an organic solvent (D), wherein the content of the organic solvent (D) is 0 to 85 percent by mass.

3.   The polyester resin aqueous dispersion according to claim 1 or 2, wherein the polyester resin is a polyester resin having carboxyl groups introduced by using a polybasic acid in a depolymerization reaction and/or an addition reaction.

4. The polyester resin aqueous dispersion according to claim 3, wherein the polybasic acid is a trifunctional or higher polybasic acid.

5. The polyester resin aqueous dispersion according to any one of claims 1 to 4, wherein the polyester resin is a polyester resin containing an aromatic polybasic acid in an amount of 50 mole % or more as the polybasic acid component.

6. A process for producing the polyester resin aqueous dispersion according to any one of claims 1 to 5, comprising; dispersing a solution of a polyester resin (A) in an organic solvent together with a basic compound (B) in water by phase-inversion emulsification, wherein the concentration of the polyester resin (A) in the solution is 10 to 70% by mass and wherein the phase-inversion emulsification is carried out at a temperature of 40°C or lower.

7. The process for producing the polyester resin aqueous dispersion according to Claim 6, further comprising; removing the organic solvent after the phase-inversion emulsification.

8. The process for producing the polyester resin aqueous dispersion according to Claim 6 or 7, wherein the amount of the basic compound (B) used satisfies the following Formula (1):

$$-0.25 \times E + 2.5 \leq F \leq -5 \times E + 50 \quad (1)$$

wherein in the formula (1) E represents an acid value of the polyester resin (A) (mg KOH/g); and F represents an equivalence ratio of the basic compound (B) to the total mole quantity of the carboxyl groups of polyester resin (A).

**Patentansprüche**

1. Wässrige Dispersion aus Polyesterharz, umfassend ein Polyesterharz (A) mit einem Säurewert von 2 mg KOH/g oder mehr und weniger als 8 mg KOH/g und einem Molekulargewicht im Zahlenmittel von 5000 oder mehr, eine basische Verbindung (B) und Wasser (C), worin der Gehalt des Polyesterharzes (A) 1 bis 70 Massen-% ist, wobei der Gehalt von Wasser (C) 10 Massen-% oder mehr ist, wobei die volumengemittelte Teilchengröße in der wässrigen Dispersion aus dem Polyesterharz 400 nm oder weniger ist, und worin kein Tensid enthalten ist.

2. Wässrige Dispersion aus Polyesterharz nach Anspruch 1, weiterhin umfassend ein organisches Lösungsmittel (D), worin der Gehalt des organischen Lösungsmittels (D) 0 bis 85 Massen-% ist.

3. Wässrige Dispersion aus Polyesterharz gemäß Anspruch 1 oder 2, worin das Polysterharz ein Polyesterharz mit Carboxylgruppen ist, die unter Verwendung einer polybasischen Säure in einer Dipolymerisationsreaktion und/oder Additionsreaktion eingefügt sind.

4. Wässrige Dispersion aus Polyesterharz gemäß Anspruch 3, worin die polybasische Säure eine trifunktionelle oder höher funktionelle polybasische Säure ist.

5. Wässrige Dispersion aus Polyesterharz gemäß einem der Ansprüche 1 bis 4, worin das Polyesterharz ein Polyesterharz ist, umfassend eine aromatische polybasische Säure in einer Menge von 50 Mol-% oder mehr als polybasische Säurekomponente.

6. Verfahren zur Erzeugung der wässrigen Dispersion aus dem Polyesterharz gemäß einem der Ansprüche 1 bis 5, umfassend:

   Dispergieren einer Lösung eines Polyesterharzes (A) in einem organischen Lösungsmittel zusammen mit einer basischen Verbindung (B) in Wasser durch Phasenumkehremulsion, worin die Konzentration des Polyesterharzes (A) in der Lösung 10 bis 70 Massen-% ist und worin die Phasenumkehremulsion bei einer Temperatur von 40°C oder weniger durchgeführt wird.

7. Verfahren zur Erzeugung der wässrigen Dispersion aus dem Polyesterharz gemäß Anspruch 6, weiterhin umfassend die Entfernung des organischen Lösungsmittels nach der Phasenumkehremulsion.

**8.** Verfahren zur Erzeugung der wässrigen Dispersion aus dem Polyesterharz gemäß Anspruch 6 oder 7, worin die Menge der verwendeten basischen Verbindung (B) die folgende Formel (1) erfüllt:

$$-0{,}25 \times E + 2{,}5 \le F \le -5 \times E + 50 \qquad (1)$$

worin in der Formel (1) E ein Säurewert des Polyesterharzes (A) (mg KOH/g) und F ein Äquivalenzverhältnis der basischen Verbindung (B) zur gesamten Molmenge der Carboxylgruppen des Polyesterharzes (A) ist.

**Revendications**

**1.** Dispersion aqueuse de résine de polyester comprenant : une résine de polyester (A) ayant un indice d'acide de 2 mg KOH/g ou plus et inférieur à 8 mg KOH/g et une masse moléculaire moyenne en nombre de 5 000 ou plus ; un composé basique (B) ; et de l'eau (C), dans laquelle la teneur en la résine de polyester (A) est de 1 à 70 % en masse, la teneur en eau (C) est de 10 % en masse ou plus, la granulométrie moyenne en volume des particules dans la dispersion aqueuse de résine de polyester est de 400 nm ou moins, et aucun tensioactif n'est présent.

**2.** Dispersion aqueuse de résine de polyester selon la revendication 1, comprenant en outre un solvant organique (D), dans laquelle la teneur en ledit solvant organique (D) est de 0 à 85 % en masse.

**3.** Dispersion aqueuse de résine de polyester selon la revendication 1 ou 2, dans laquelle la résine de polyester est une résine de polyester ayant des groupes carboxyle introduits par utilisation d'un acide polybasique dans une réaction de dépolymérisation et/ou une réaction d'addition.

**4.** Dispersion aqueuse de résine de polyester selon la revendication 3, dans laquelle l'acide polybasique est un acide polybasique trifonctionnel ou polyfonctionnel supérieur.

**5.** Dispersion aqueuse de résine de polyester selon l'une quelconque des revendications 1 à 4, dans laquelle la résine de polyester est une résine de polyester contenant un acide polybasique aromatique en une quantité de 50 % en moles ou plus à titre du composant acide polybasique.

**6.** Procédé pour produire la dispersion aqueuse de résine de polyester selon l'une quelconque des revendications 1 à 5, comprenant : la dispersion d'une solution d'une résine de polyester (A) dans un solvant organique conjointement avec un composé basique (B) dans de l'eau par émulsification à inversion de phases, la concentration de la résine de polyester (A) dans la solution étant de 10 à 70 % en masse, dans lequel l'émulsification à inversion de phases est mise en oeuvre à une température de 40˚C ou moins.

**7.** Procédé pour produire la dispersion aqueuse de résine de polyester selon la revendication 6, comprenant en outre l'élimination du solvant organique après l'émulsification à inversion de phases.

**8.** Procédé pour produire la dispersion aqueuse de résine de polyester selon la revendication 6 ou 7, dans lequel la quantité du composé basique (B) utilisé satisfait à la formule (1) suivante :

$$-0{,}25 \times E + 2{,}5 \le F \le -5 \times E + 50 \qquad (1)$$

dans lequel, dans la formule (1), E représente l'indice d'acide de la résine de polyester (A) (mg KOH/g) ; et F représente le rapport d'équivalence du composé basique (B) à la quantité molaire totale des groupes carboxyle de la résine de polyester (A).

Fig.1

EP 1 555 295 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 296100 A
- JP 26709 A
- JP 313793 A
- JP 2002173582 A
- JP 24375 A
- JP 14101 A
- JP 3162477 B
- EP 1202122 A1